# EUROPEAN PATENT SPECIFICATION

(11) **EP 3 559 466 B1**
(45) Date of publication and mention of the grant of the patent: **17.02.2021**
(21) Application number: 17835650.7
(22) Date of filing: 18.12.2017
(51) Int. Cl.: F04C 2/08, F04C 2/18

(54) **A BEVERAGE DISPENSING MACHINE AND A GEAR PUMP THEREFOR**
GETRÄNKEAUSGABEAUTOMAT UND ZAHNRADPUMPE DAFÜR
MACHINE DE DISTRIBUTION DE BOISSON ET POMPE À ENGRENAGES ASSOCIÉE

(30) Priority: 22.12.2016 DK PA201671025
(43) Date of publication of application: 30.10.2019
(73) Proprietor: Hafnia Pumps ApS, 2600 Glostrup (DK)
(72) Inventor: LISBY, Thomas, 5700 Svendborg (DK)
(74) Representative: Høiberg P/S
(86) International application number: PCT/EP2017/083303
(87) International publication number: WO 2018/114797

(56) References cited:
- CN-A- 1 743 673
- DE-A1-102008 028 059
- DE-A1-102015 109 395
- JP-A- 2001 182 670
- US-A1- 2011 083 523
- US-A1- 2012 305 603

## Description

### Field of invention

The present invention relates to a beverage dispensing machine and a gear pump therefor.

### Background of invention

In a modern household, it is common to find a coffee machine. In some households, there may also be an espresso machine. A state-of-the-art espresso machine for the so-called prosumer market, i.e. the market between the consumer market and the professional market, have recently been made with gear pumps. Such machines are able to provide a pressure regulated espresso coffee, because a gear pump is able to be controlled with great precision. The pump is operated with pressure profiles that produce operating pressures between 2 and 12 bars. Such pressure is typically used for brewing an espresso. An espresso is typically brewed within 15 to 30 seconds. In this brewing time, low cost machines typically start with a pressure of up to 15 bars, and do not maintain the pressure throughout the brewing. Some coffee makers, believe that the pressure should be maintained, for example at 9 bars, though the brewing, whereas with the state-of-the-art espresso machine with the regulated gear pump, pressure is regulated through the brewing. Nevertheless, coffee brewing is personal and individual, since taste is also personal and individual. However, there is no doubt that espresso may refer to a coffee brewing method where coffee is made with high pressure of hot water though grinded coffee, where the high pressure is between 2 and 15 bars, and the brewing is achieved in a time between 15 and 30 seconds. Thus, to get the "perfect espresso" based on personal taste, there are several parameters that can be adjusted. In addition to choosing the personal and individual pressure through the brewing, people may experiment with brewing time, temperature of water though the brewing, to which level of the coffee beans needs to be roasted, grinded and measured, and packed. In experimenting with the perfect espresso and a pump therefore, only two parameters can be adjusted: the pressure though the brewing and the time of the brewing. The pressure depends on the volume of water delivered per second. However, the pressure can be obtained under several working conditions.

A gear pump is typically not used in an espresso machine. Typically, espresso machines have either a vibration pump or a piston pump, since these are much cheaper than a gear pump.

In the state-of-the-art espresso machine, a commercially available gear pump is used. One problem with the gear pump is its rather noisy performance. A problem with the state-of-the-art espresso machine is that it can only be used for espresso, and not for brewing other types of coffee, such as filter coffee or instant coffee.

Document JP2001-182670 A discloses a gear pump with one profile shifted gear only. Document CN1743673 A discloses a negative profile shift in an external gear pump.

Thus, there is a need for providing an optimized gear pump for a beverage dispensing machine that can be operated without noise. There is also a need for a beverage dispensing machine that can be operated both as an espresso machine and a coffee machine.

### Summary of invention

The present disclosure relates in a first aspect to a gear pump configured for a beverage dispensing machine, comprising: a pump chamber configured for holding a liquid; an inlet in the pump chamber for providing the liquid to the pump; an outlet in the pump chamber for dispensing the liquid; and a driving gear wheel meshing with a driven gear wheel inside the pump chamber.

The beverage dispensing machine may in some embodiments be a coffee machine, for example for brewing an espresso, and or for brewing a regular coffee. In other embodiments, the beverage dispensing machine may be for dispensing carbonized drinks.

In a preferred embodiment of the gear pump, the driving gear and driven gear wheel are configured for being operated in at least a first configuration, such that in the first configuration, the liquid is pumped at a first operating pressure between 2 and 15 bars with a first flow rate being less than 20 mL/s. This configuration corresponds to brewing parameters for the method referred to as espresso.

According to the invention, the driving gear wheel and the driven gear wheel i are profile shifted gear wheels. In other words, each one of the driving gear wheel and the driven gear wheel is a profile shifted gear wheel. A profile shifted gear is a non-standard gear. A profile shifted gear is a gear, which has a larger pitch diameter than the standard gear. The pitch diameter is a predetermined diametral position on the gear wheel, where the circular tooth thickness, pressure angle and helix angle are defined. These terms are well-known in the field of gears. A profile shifted gear is a gear that has been adjusted by profile shifting. Profile shifting, also known as addendum modification, or correction, is the displacement or shifting of the teeth outward or inward in comparison to a standard gear wheel. A standard gear wheel is defined by its pitch diameter, number of teeth, and its module, m, being equal to the ratio between the pitch diameter and the number of teeth. A standard gear has further an addendum that is equal to the module. A profile shifted gear is a gear where the addendum is different from the module. The addendum refers to the radial distance from the pitch diameter to the outermost point of the tooth, i.e. the radial distance between the pitch diameter and the outer diameter of the gear wheel.

Profile shifting is used for many reasons when making gears for different purposes. The main reason is to avoid undercut of the teeth. Other reasons include reducing sliding, and balancing sliding to maximize wear resistance. Such advantages are clear indications of why gear shifted gears should be used for example a hydraulic gear pumps for a car.

However, the advantages do come with a cost of size. An increase in gear shifting facilitates that the centre distance, i.e. the distance from the centre of each of the two gears, increases. Consequently, the pump chamber of the gear pump also increases. It is typically not desirable to have a large pump chamber in a coffee machine, since this affects the cost, the size, and the look of the machine. It is therefore no surprise that an espresso machine with a gear pump would use only standard gear wheels.

Nevertheless, the inventors have found that gear shifting improves a standard gear pump used in espresso machines, in particular such that flowrate fluctuations are reduced. Thus, the embodiment related to profile shifting, facilitates that coffee is able to be brewed under more optimal conditions in comparison with a standard gear wheel. In other words, the present invention provides a gear pump that is able to pump water such that a coffee tastes better, in particular because the gear pump provides brewing with less flowrate fluctuations.

Further, the inventors also realized that when using gear shifted gears, noise was also supressed. Accordingly, the present invention provides a gear pump with reduced pump noise, in particular when operating at high pressure.

Further, the inventors also noticed that when using gear shifted gears, the mean flowrate increased slightly. Thus, the present invention provides a gear pump with increased flow rate in comparison to a gear pump with standard gear wheels.

All in all, the inventors have found that using profile shifted gears in a gear pump for a beverage dispensing machine provides an efficient gear pump that produces a more optimal brewed coffee, where the coffee is brewed with low noise at high pressure.

The present disclosure relates in a second aspect to a beverage dispensing machine comprising the gear pump according the first aspect.

### Description of drawings

Fig. 1 shows an exploded view of the gear pump according to the present invention.
Fig. 2 shows a perspective view of the gear pump according to the present invention.

### Detailed description of the invention

The present disclosure relates to a gear a gear pump for a beverage dispensing machine, comprising: a pump chamber; and a driving gear wheel meshing with a driven gear wheel inside the pump chamber. Further details of the invention are described in the following.

### Driving gear wheel dimensions

A driving gear wheel is at least defined by the following parameters: number of teeth, *N*, pitch diameter, *d*, and module, *m*, defined as the ratio of between the pitch diameter and the number of teeth, *m*=*d*/*N,* and a profile shift coefficient, *x*. The profile shift coefficient is dimensionless. The shift, for example measured in mm, is made dimensionless by dividing by the module *m*, the module having dimesions such as mm or inches. A positive profile shift increases tooth thickness and a negative profile shift decreases tooth thickness.

As previously described, both the driving gear i and the driven gear are profile shifted gears.

In one embodiment of the gear pump, the gear wheels are profile shifted, such that the profile shift coefficient is positive. In other embodiments, the profile shift coefficient is negative.

In a more preferred embodiment , the gear wheels are profile shifted, such that the profile shift coefficient is between 0.1 and 1.0. In other more preferred embodiments, the profile shift coefficient is between 0.4 and 1.0, such as around 0.6, in particular 0.5986. The profile shift coefficient may be selected such that for a given number of teeth, pitch diameter, and module, the profile shift coefficient provides optimal operating conditions. According to the present invention, the teeth, pitch diameter, and module may be configured for providing a pressure between 2 and 15 bars with a first flow rate being less than 20 mL/s.

In some preferred embodiments, the gear wheels are profile shifted, such that the profile shift coefficient is between -0.1 and -1.0. In other preferred embodiments, the profile shift coefficient is between -0.4 and -1.0.

According to the embodiments described above, the addendum differs from the module. In some embodiments, the addendum differs from the module by a factor of 1.2 or more, such as more than 1.3 or more than 1.4. The factor may either be negative of positive.

In one embodiment of the gear pump, the driving gear wheel is defined by a module between 0.5 mm and 1.5 mm, more preferably between 0.75 mm and 1.25, most preferably between 0.9 mm and 1.1 mm, such as around 1 mm. The module may be seen as the curved distance between the teeth along the pitch diameter. Thus, a module according to this embodiment provides for delivering between 10 mL/s to 30 mL/s, such as around 20 mL/s, or such as less than 20 mL/s in a configuration where the driving gear wheel is rotating between 2000 rpm and 4000 rpm, such as between 2500 and 3500 rpm.

In most preferred embodiments, the driving gear wheel is selected to deliver between 15-25 mL/s when rotating at around 2500 rpm. Another way of defining this is to define the volume between two teeth.

Thus, in some embodiments, the area between two teeth is more than 3 mm², and the width of gear is more than 3 mm, such as more than 4 mm, such as 5 mm. Such configurations may define a flow of around 20 mL/s when the driving gear wheel is rotating at around 2500 rpm.

In another embodiment of the gear pump, the driving gear wheel is defined the number of teeth being between 10 and 22 teeth, such as between 12 and 20 teeth, such as between 14 and 18 teeth, such as 15 teeth, or 16 teeth or 17 teeth. Having such an amount of teeth and the above described module, implies that a rather big gear wheel is obtained. The inventors of the present invention have found that although a big gear wheel introduces more cost in terms of material than a small gear wheel, such a size provides a gear pump that is adapted and optimized specifically for providing the high pressure as required in an espresso machine. A further advantage of a gear wheel having a the module according to the previous embodiment, and the number of teeth as here described, is that the combination provides a gear pump with low noise. As can be calculated from the previous embodiments, the driving gear wheel is defined by a pitch diameter between 10 mm and 24 mm, such as between 12 mm and 22 mm, such as between 14 mm and 20 mm, such as between 16 mm and 18 mm, such as 17 mm. Accordingly, the driving gear wheel may be defined by an outer diameter between 11 mm and 25 mm, such as, such as between 16 mm and 20mm, such as between 17 mm and 19 mm, such as 18.803 mm. In most preferred embodiments, the driving gear wheel is defined by an outer diameter that is less than 20 mm.

As described in the above embodiment, the number of teeth, pitch diameter, module were seen in combination to provide an optimal gear wheel for a beverage dispensing machine, in particular an espresso machine. However, the number of teeth, pitch diameter, and module may in some embodiments be non-related.

In a most preferred embodiment of the gear pump, the driving gear wheel is configured to provide a slip. Typically, gears are profile shifted to avoid or reduce slipping or sliding, also called backlash. Therefore, as just described, slipping may in some embodiments be achieved by other means than profile shifting the gear. For example, the center distance may be increased. Accordingly, the center distance may be selected to provide backlash of the two meshing gear wheels when operating at high pressure. An advantage of providing backlash in a beverage dispensing machine is that this will reduce the flow rate to such that the flow rate is adapted to provide a flow rate less than 20 mL/s. In this way, the backlash is introduced for brewing an espresso. Reduction of flow rate may be caused by the counter pressure that will be present when brewing at high pressure, such as when brewing an espresso.

### Driving gear wheel materials

In one embodiment of the gear pump, the driving gear wheel is made of a plastic material or a synthetic resin material. Such materials may be preferred over harder materials since they will not make as much noise as harder materials. In a second embodiment of the gear pump, the driving gear wheel is made of ceramic, or steel. Ceramic or steel have a larger mass and are harder in comparison to a plastic material and a synthetic resin material. Thus, ceramic or steel may be preferred over materials with low hardness and mass to introduce low vibration. Hence, ceramic or steel may be used to introduce further noise suppression.

In another embodiment of the gear pump, the driving gear wheel is made of a food contact material, such as Copolyester, Acetal Copolymer, Polyether ether ketone, Polyamide, stainless steel type 316, polytetraflouroethylen. Stainless steel type 316 may be used to introduce further noise suppression since it has a low natural frequency. At the same time, stainless steel type 316 may be optimal and/or allowed when preparing liquids in a beverage dispensing machine.

### Bearings

In one embodiment of the gear pump, the driving gear wheel is mounted on an axle, wherein the axle comprises a bearing on each side of the driving gear wheel. This provides for further noise suppression in that the gear wheels are able to rotate without friction.

The bearing may be made of plastic, or ceramic, or steel. In some embodiments, the bearing(s) is/are made of a food contact material, such as Copolyester, Acetal Copolymer, Polyether ether ketone, Polyamide, stainless steel type 316, polytetraflouroethylen.

In some embodiments, the bearing is configured for being operating with an axle rotating at a tangential speed of more than 1 m/s. For example, if the diameter of the axle is 8mm, and the axle is rotating at 2500 rpm, the tangential speed is 1.04 m/s. Such tangential speeds are common in a dispensing machine according to the present invention. The inventors have found that a bearing that is both made of a food contact material and configured for being operating with an axle rotating at a tangential speed of more than 1 m/s may provide an optimal combination for a dispensing machine.

### Driven gear wheel

In preferred embodiments, the driven gear wheel is identical to the driving gear wheel. This provides for a simple manufacturing process.

However, in other preferred embodiments, the driven gear wheel is different from the driving gear wheel. The driven gear wheel may differ in dimensions and in choice of material. One advantage of having the driven gear with for example more teeth than the driving gear is to reduce the amplitude of pulses that are generated by the gear pump. The inventors have also found that by having different gear wheels, the natural frequencies of the gear wheels are different, thereby reducing noise and/or vibrations in the pump.

### Beverage dispensing machine

In one embodiment of the beverage dispensing machine, the beverage dispensing machine is configured for dispensing water at a pressure between 2 and 15 bars, wherein in this configuration, a coffee is brewed as an espresso, and wherein the beverage dispensing machine is configured for dispensing water at a pressure between 1 and 5 bars, wherein in this configuration, a coffee is brewed as a regular coffee.

On some embodiments, the beverage dispensing machine is a coffee machine configured for brewing regular coffee such as filter coffee or instant coffee. In most embodiments the beverage dispensing machine is configured for brewing espresso coffee, meaning that coffee is made with high pressure of hot water though grinded coffee, where the high pressure is between 2 and 15 bars, and the brewing is achieved in a time between 15 and 30 seconds. In preferred embodiments, the beverage dispensing machine is configured for brewing regular coffee or espresso coffee, based on how the machine is operated. For example, the beverage dispensing machine may be configured for being operated at two different pressure configurations: a first pressure configuration, wherein a first pressure is less than 5 bar and a second pressure configuration, where a second pressure is more than 12 bar. The second pressure configuration is selected when brewing an espresso.

Each pressure configuration is selected for supplying water to different types of coffee, such that: in the first pressure configuration, water is supplied to regular coffee, such as instant coffee or filter coffee; and in the second pressure configuration, water is supplied to espresso coffee.

In some embodiments, the pump is configured for providing a pressure of more than 10 bar, such as 11 bar, such as 12 bar, such as 13 bar, such as 14 bar, or such as 15 bar.

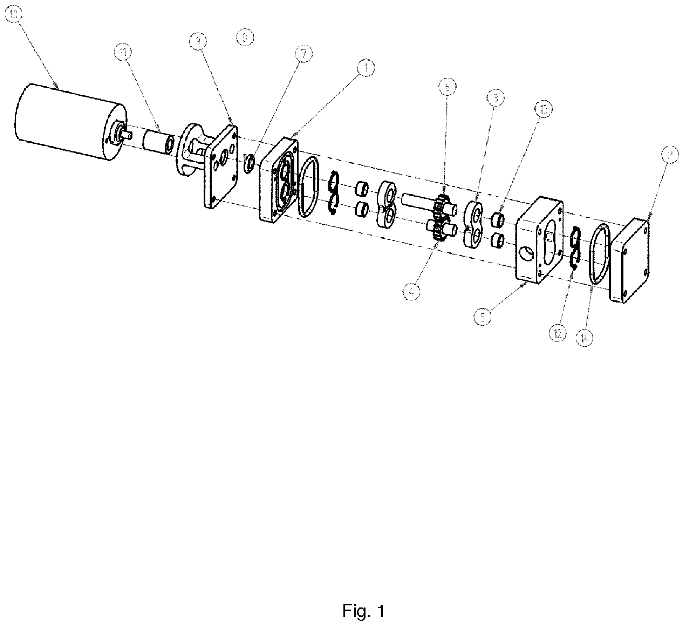

A **gear pump according to the present invention** **Fig. 1** shows an embodiment of a gear pump according to the present invention. The gear pump as shown is for a beverage dispensing machine. The gear pump comprises a pump chamber **5**; a driving gear wheel **6** meshing with a driven gear wheel **4** inside the pump chamber **5**. As can be seen, the driving gear wheel **6** is mounted on an axle, wherein the axle comprises a bearing **13** on each side of the driving gear wheel **6**. Similarly, the driven gear wheel **4** is mounted on an axle, wherein the axle comprises a bearing **13** on each side of the driven gear wheel **4**.The bearings **13** are located inside thrust plates **3**. The thrust plates are connected to a first liquid tight seal **12**. On each side of the pump chamber is a second liquid tight seal **14**. One of the second liquid tight seals **14** is connected to the pump back cover **2** configured for covering the pump chamber **5**. Another of the second liquid tight seals **14** is connected to the pump front cover **1** configured for covering the pump chamber **5**. A motor **10** is coupled to the axle passing though the driving gear wheel **6** via a coupling **11**.

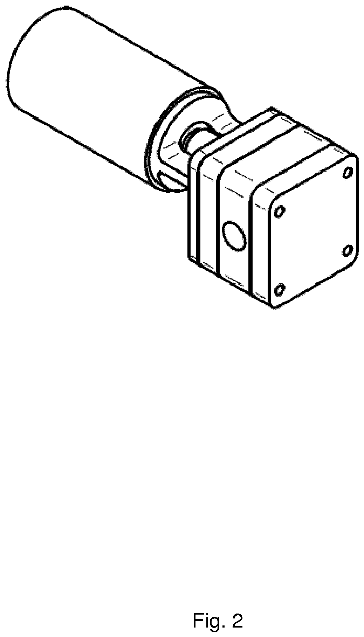

**Fig. 2** shows the gear pump according to the present invention as assembled. The gear pump as shown in **Fig. 2** comprises all the part as described above for Fig. 1.

## Claims

1. A gear pump configured for a beverage dispensing machine, comprising:
- a pump chamber configured for holding a liquid;
- an inlet in the pump chamber for providing the liquid to the pump;
- an outlet in the pump chamber for dispensing the liquid; and
- a driving gear wheel meshing with a driven gear wheel inside the pump chamber and **characterised in that** the driving gear wheel and the driven gear wheel are profile shifted gear wheels.

2. The gear pump according to claim 1, wherein the profile shifted gear is defined by a profile shifting coefficient between 0.1 and 1.0.

3. The gear pump according to any of the preceding claims, wherein the driving gear wheel is defined by a module between 0.5 mm and 1.5 mm, more preferably between 0.75 mm and 1.25, most preferably between 0.9 mm and 1.1 mm, such as around 1 mm.

4. The gear pump according to any of the preceding claims, wherein the driving gear wheel is defined by the number of teeth being between 10 and 22 teeth, such as between 12 and 20 teeth, such as between 14 and 18 teeth, such as 15 teeth, or 16 teeth or 17 teeth.

5. The gear pump according to any of the preceding claims, wherein the driving gear wheel is defined by a pitch diameter between 10 mm and 24 mm, such as between 12 mm and 22 mm, such as between 14 mm and 20 mm, such as between 16 mm and 18 mm, such as 17 mm.

6. The gear pump according to any of the preceding claims, wherein the driving gear wheel is defined by an outer diameter between 11 mm and 25 mm, such as, such as between 16 mm and 20mm, such as between 17 mm and 19 mm, such as 18.803 mm.

7. The gear pump according to any of the preceding claims, wherein the driving gear wheel is made of plastic, or ceramic, or steel.

8. The gear pump according to any of the preceding claims, wherein the driving gear wheel is made of a food contact material, such as Copolyester, Acetal Copolymer, Polyether ether ketone, Polyamide, stainless steel type 316, polytetraflouroethylen.

9. The gear pump according to any of the preceding claims, wherein the driving gear wheel is mounted on an axle, wherein the axle comprises a bearing on each side of the driving gear wheel.

10. The gear pump according to claim 9, wherein the bearing is made of plastic, or ceramic, or steel.

11. The gear pump according to claim 9, wherein the bearing is made of a food contact material, such as Copolyester, Acetal Copolymer, Polyether ether ketone, Polyamide, stainless steel type 316, polytetraflouroethylen.

12. The gear pump according to any of the preceding claims, wherein the driving gear wheel is configured for rotating at a speed between 2000 rpm and 4000 rpm, such as around 2500 rpm.

13. The gear pump according to any of the preceding claims, wherein the driven gear wheel is identical to the driving gear wheel.

14. A beverage dispensing machine comprising the gear pump according to any of the claims 1-13.

15. The beverage dispensing machine according to claim 14, wherein the beverage dispensing machine is configured for dispensing water at a pressure between 2 and 15 bars, wherein in this configuration, a coffee is brewed as an espresso, and wherein the beverage dispensing machine is configured for dispensing water at a pressure between 1 and 5 bars, wherein in this configuration, a coffee is brewed as a regular coffee.

## Patentansprüche

1. Zahnradpumpe, die für einen Getränkeausgabeautomat konfiguriert ist, umfassend:
- eine Pumpenkammer, die zum Halten einer Flüssigkeit konfiguriert ist;
- einen Einlass in der Pumpenkammer zum Bereitstellen der Flüssigkeit an die Pumpe;
- einen Auslass in der Pumpenkammer zum Ausgeben der Flüssigkeit; und
- ein Antriebszahnrad, das mit einem Abtriebszahnrad in der Pumpenkammer ineinandergreift und **dadurch gekennzeichnet ist, dass** das Antriebszahnrad und das Abtriebszahnrad profilverschobene Zahnräder sind.

2. Zahnradpumpe nach Anspruch 1, wobei das profilverschobene Zahnrad durch einen Profilverschiebungskoeffizienten zwischen 0,1 und 1,0 definiert ist.

3. Zahnradpumpe nach einem der vorstehenden Ansprüche, wobei das Antriebszahnrad durch ein Modul zwischen 0,5 mm und 1,5 mm, weiter bevorzugt zwischen 0,75 mm und 1,25, am meisten bevorzugt zwischen 0,9 mm und 1,1 mm, z. B. etwa 1 mm, definiert ist.

4. Zahnradpumpe nach einem der vorstehenden Ansprüche, wobei das Antriebszahnrad dadurch definiert ist, dass die Anzahl von Zähnen zwischen 10 und 22 Zähnen liegt, z. B. zwischen 12 und 20 Zähnen, z. B. zwischen 14 und 18 Zähnen, z. B. 15 Zähne oder 16 Zähne oder 17 Zähne.

5. Zahnradpumpe nach einem der vorstehenden Ansprüche, wobei das Antriebszahnrad durch einen Teilkreisdurchmesser zwischen 10 mm und 24 mm definiert ist, z. B. zwischen 12 mm und 22 mm, z. B. zwischen 14 mm und 20 mm, z. B. zwischen 16 mm und 18 mm, z. B. 17 mm.

6. Zahnradpumpe nach einem der vorstehenden Ansprüche, wobei das Antriebszahnrad durch einen äußeren Durchmesser zwischen 11 mm und 25 mm definiert ist, z. B. zwischen 16 mm und 20 mm, z. B. zwischen 17 mm und 19 mm, z. B. 18,803 mm.

7. Zahnradpumpe nach einem der vorstehenden Ansprüche, wobei das Antriebszahnrad aus Kunststoff oder Keramik oder Stahl hergestellt ist.

8. Zahnradpumpe nach einem der vorstehenden Ansprüche, wobei das Antriebszahnrad aus einem Lebensmittelkontakt-Material hergestellt ist, z. B. Copolyester, Acetalcopolymer, Polyetheretherketon, Polyamid, Edelstahl Typ 316, Polytetrafluorethylen.

9. Zahnradpumpe nach einem der vorstehenden Ansprüche, wobei das Antriebszahnrad auf einer Achse befestigt ist, wobei die Achse ein Lager auf jeder Seite des Antriebszahnrads umfasst.

10. Zahnradpumpe nach Anspruch 9, wobei das Lager aus Kunststoff oder Keramik oder Stahl hergestellt ist.

11. Zahnradpumpe nach Anspruch 9, wobei das Lager aus einem Lebensmittelkontakt-Material hergestellt ist, z. B. Copolyester, Acetalcopolymer, Polyetheretherketon, Polyamid, Edelstahl Typ 316, Polytetrafluorethylen.

12. Zahnradpumpe nach einem der vorstehenden Ansprüche, wobei das Antriebszahnrad für eine Rotation bei einer Geschwindigkeit zwischen 2.000 U/min und 4.000 U/min, z. B. etwa 2.500 U/min, konfiguriert ist.

13. Zahnradpumpe nach einem der vorstehenden Ansprüche, wobei das Abtriebszahnrad und das Antriebszahnrad identisch sind.

14. Getränkeausgabeautomat, umfassend die Zahnradpumpe nach einem der Ansprüche 1-13.

15. Getränkeausgabeautomat nach Anspruch 14, wobei der Getränkeausgabeautomat dazu konfiguriert ist, Wasser bei einem Druck zwischen 2 und 15 bar auszugeben, wobei in dieser Konfiguration ein Kaffee als Espresso gebraut wird, und wobei der Getränkeausgabeautomat dazu konfiguriert ist, Wasser bei einem Druck zwischen 1 und 5 bar auszugeben, wobei in dieser Konfiguration ein Kaffee als ein normaler Kaffee gebraut wird.

## Revendications

1. Pompe à engrenages conçue pour une machine de distribution de boisson, comprenant :
- une chambre de pompe conçue pour contenir un liquide ;
- une entrée dans la chambre de pompe pour fournir le liquide à la pompe ;
- une sortie dans la chambre de pompe pour distribuer le liquide ; et
- une roue dentée d'entraînement s'engrenant avec une roue dentée entraînée à l'intérieur de la chambre de pompe et
**caractérisée en ce que**
la roue dentée d'entraînement et la roue dentée entraînée sont des roues dentées à profil décalé.

2. Pompe à engrenages selon la revendication 1, dans laquelle l'engrenage à profil décalé est défini par un coefficient de décalage de profil compris entre 0,1 et 1,0.

3. Pompe à engrenages selon l'une quelconque des revendications précédentes, dans laquelle la roue dentée d'entraînement est définie par un module compris entre 0,5 mm et 1,5 mm, plus préférablement entre 0,75 mm et 1,25, le plus préférablement entre 0,9 mm et 1,1 mm, par exemple environ 1 mm.

4. Pompe à engrenages selon l'une quelconque des revendications précédentes, dans laquelle la roue dentée d'entraînement est définie par le fait que le nombre de dents est compris entre 10 et 22 dents, par exemple entre 12 et 20 dents, par exemple entre 14 et 18 dents, par exemple 15 dents, ou 16 dents ou 17 dents.

5. Pompe à engrenages selon l'une quelconque des revendications précédentes, dans laquelle la roue dentée d'entraînement est définie par un diamètre primitif compris entre 10 mm et 24 mm, par exemple entre 12 mm et 22 mm, par exemple entre 14 mm et 20 mm, par exemple entre 16 mm et 18 mm, par exemple 17 mm.

6. Pompe à engrenages selon l'une quelconque des revendications précédentes, dans laquelle la roue dentée d'entraînement est définie par un diamètre extérieur compris entre 11 mm et 25 mm, par exemple entre 16 mm et 20 mm, par exemple entre 17 mm et 19 mm, par exemple 18,803 mm.

7. Pompe à engrenages selon l'une quelconque des revendications précédentes, dans laquelle la roue dentée d'entraînement est constituée de plastique, de céramique ou d'acier.

8. Pompe à engrenages selon l'une quelconque des revendications précédentes, dans laquelle la roue dentée d'entraînement est constituée d'un matériau apte à être en contact avec la nourriture, tel que le copolyester, le copolymère d'acétal, le polyéther-éther-cétone, le polyamide, l'acier inoxydable de type 316, le polytétrafluoroéthylène.

9. Pompe à engrenages selon l'une quelconque des revendications précédentes, dans laquelle la roue dentée d'entraînement est montée sur un axe, dans laquelle l'axe comprend un palier de chaque côté de la roue dentée d'entraînement.

10. Pompe à engrenages selon la revendication 9, dans laquelle le palier est constitué de plastique, de céramique ou d'acier.

11. Pompe à engrenages selon la revendication 9, dans laquelle le palier est constitué d'un matériau apte à être en contact avec la nourriture, tel que le copolyester, le copolymère d'acétal, le polyéther-éther-cétone, le polyamide, l'acier inoxydable de type 316, le polytétrafluoroéthylène.

12. Pompe à engrenages selon l'une quelconque des revendications précédentes, dans laquelle la roue dentée d'entraînement est conçue pour tourner à une vitesse comprise entre 2 000 tours par minute et 4 000 tours par minute, par exemple environ 2 500 tours par minute.

13. Pompe à engrenages selon l'une quelconque des revendications précédentes, dans laquelle la roue dentée entraînée est identique à la roue dentée d'entraînement.

14. Machine de distribution de boisson comprenant la pompe à engrenages selon l'une quelconque des revendications 1 à 13.

15. Machine de distribution de boisson selon la revendication 14, dans laquelle la machine de distribution de boisson est conçue pour distribuer de l'eau à une pression comprise entre 2 et 15 bars, dans laquelle, dans cette configuration, un café est préparé sous forme d'expresso, et dans laquelle la machine de distribution de boisson est conçue pour distribuer de l'eau à une pression comprise entre 1 et 5 bars, dans laquelle, dans cette configuration, un café est préparé sous forme de café classique.
